# EUROPÄISCHE PATENTSCHRIFT

(11) **EP 1 088 749 B1**
(45) Veröffentlichungstag und Bekanntmachung des Hinweises auf die Patenterteilung: **29.08.2007**
(21) Anmeldenummer: 00116564.6
(22) Anmeldetag: 01.08.2000
(51) Int. Cl.: B62D 25/06, B62D 65/00, B60R 13/02

(54) **Fahrzeugdach**
Vehicle roof
Toit de véhicule

(30) Priorität: 30.09.1999 DE 19947238
(43) Veröffentlichungstag der Anmeldung: 04.04.2001
(73) Patentinhaber: ArvinMeritor GmbH, 63128 Dietzenbach (DE)
(72) Erfinder: Grimm, Rainer, Dipl.-Ing, 60599 Frankfurt (DE); Mondello, Carmelo, Dipl.-Ing., 60318 Frankfurt (DE)
(74) Vertreter: Oppermann, Mark

(56) Entgegenhaltungen:
- WO-A-95/21700
- DE-A- 4 206 255
- DE-A- 19 709 016

## Beschreibung

Die Erfindung bezieht sich auf ein Fahrzeugdach, insbesondere für Kraftfahrzeuge, entsprechend den Oberbegriffen der nebengeordneten Patentansprüche 1 und 2.

Bevorzugtes Anwendungsgebiet der Erfindung sind Fahrzeugdachmodule, die getrennt von der Fahrzeugkarosserie fertiggestellt und erst am Montageband in der Automobilfabrik mit der Fahrzeugkarosserie vereinigt werden. Derartige Fahrzeugdachmodule erfreuen sich insbesondere wegen der erheblichen Verkürzung der Montagezeit am Montageband einer zunehmenden Bedeutung. Sind derartige Fahrzeugdachmodule mit einer integrierten Schiebedacheinheit ausgerüstet, wie das bei dem Fahrzeugdach gemäß Anspruch 2 der Fall ist, eröffnet die getrennte Herstellung die vorteilhafte Möglichkeit einer Funktionskontrolle der vormontierten Schiebedacheinheit schon vor Vereinigung des Dachmoduls mit der Karosserie.

Bei einem derartigen bekannten Fahrzeugdach (DE 197 09 016 A1) ist entweder der Dachhimmel untrennbarer Bestandteil der an die Dachhaut angeschäumten Innenschale, wenn keine Schiebedacheinheit vorgesehen ist, oder der Dachhimmel ist an dem Schiebedachrahmen befestigt, wenn eine Schiebedacheinheit vorgesehen ist. Jedenfalls ist bei beiden Ausführungsformen eine Austauschbarkeit des Dachhimmels nicht vorgesehen, was aber aus verschiedenen Gründen wünschenswert sein kann. So könnte der Dachhimmel an unterschiedliche Innenausstattungen des Fahrzeugs angepaßt werden, ohne daß hierfür unterschiedliche komplette Dachmodule bereitgehalten werden müssen. Auch kann die Austauschbarkeit eines beschädigten oder verschmutzten Dachhimmels wünschenswert sein, ohne daß dafür das komplette Dachmodul zu entfernen ist.

Bekannt ist auch eine lösbare Befestigung einer Innenverkleidung, insbesondere einer Dachverkleidung, an einem Aufnahmeteil eines Kraftfahrzeugs (DE 42 06 255 A1). Hierbei weist entweder die Dachverkleidung oder das Aufnahmeteil mehrere, abschnittsweise nebeneinander angeordnete und federelastische Haltezungen auf, die das jeweils andere Teil verrastend hintergreifen. Das Aufnahmeteil ist ein Schiebedachrahmen, an welchem ein in den Fahrzeuginnenraum weisender Haltefortsatz angebracht ist, der an seinem freien Endabschnitt mit einem umlaufenden Rastnocken versehen ist. An der Dachverkleidung ist zusätzlich ein getrennt herzustellender Blechrahmen befestigt, an welchem daraus abgewinkelte federnde Blechzungen angebracht sind, die mit dem Rastnocken verrastbar sind.

Dementsprechend liegt der Erfindung die Aufgabe zugrunde, ein mit oder ohne Schiebedacheinheit ausgebildetes Fahrzeugdach vorzusehen, bei dem der Dachhimmel austauschbar ist, ohne daß dafür Rastelemente als federnde Blechzungen herzustellen und an dem Dachhimmel bzw. der Innenschale zu befestigen sind.

Die gestellte Aufgabe wird erfindungsgemäß durch die Merkmale der unabhängigen Ansprüche 1 und 2 gelöst. Vorteilhafte Weiterbildungen gehen aus den Unteransprüchen hervor und sind nachfolgend ebenfalls beschrieben. Beiden in den Ansprüchen 1 und 2 angegebenen Ausgestaltungen ist gemeinsam, daß der jeweilige Dachhimmel leicht durch Verrasten angebracht und beschädigungsfrei durch Lösen der Verrastung abgenommen werden kann. Neben der Möglichkeit des Austauschens des Dachhimmels wird damit zusätzlich erreicht, daß das Dachmodul zunächst ohne Dachhimmel gehandhabt werden kann, was seine Befestigung an der Fahrzeugkarosserie erleichtert. Anschließend kann dann ein in gewünschter Weise auf die Innenausstattung des Fahrzeugs abgestimmter Dachhimmel montiert werden.

Die hier in Alleinstellung oder in Wortkombinationen verwendete Bezeichnung "Schiebedach" soll für die Zwecke der vorliegenden Erfindung nicht nur solche Konstruktionen einschließen, bei denen der Deckel nach Absenken seiner Hinterkante zur Freigabe der Dachöffnung unter die hintere feste Dachfläche verschiebbar ist, sondern auch Schiebehebedächer, bei denen der Deckel außerdem ausgehend von seiner Schließstellung um eine in der Nähe seiner Vorderkante vorgesehene Schwenkachse zur Ausstellung über die feste Dachfläche verschwenkt werden kann. Auch vorn scharnierte lüftungsklappenähnlich ausstellbare Deckel und sogenannte Oberfirstschiebedächer, bei denen der Deckel nach Anheben seiner Hinterkante teilweise zur Freigabe der Dachöffnung über die hintere feste Dachfläche verschiebbar ist, sollen eingeschlossen sein. Das gilt für alle Konstruktionen, bei denen ein unter der festen Dachfläche befestigter Schiebedachrahmen vorhanden ist.

Die Rastelemente am Dachmodul bzw. am Schiebedachrahmen und am Dachhimmel können auf unterschiedliche Weise ausgebildet sein. Sie bestehen jeweils paarweise aus einer Aufnahmevertiefung und einem Rastvorsprung. Erfindungsgemäß sind die Aufnahmevertiefungen in den Schaumkunststoff ggf. der Innenschale und/oder des Dachhimmels eingeformt. Dementsprechend können auch die Rastvorsprünge bei einem Fahrzeugdach gemäß Anspruch 1 aus dem Schaumkunststoff ggf. der Innenschale an der Innenschale und/oder dem Schaumkunststoff des Dachhimmels und damit jeweils einteilig angeformt sein. Eingeformte Aufnahmevertiefungen und angeformte Rastvorsprünge machen getrennt herzustellende und anzubringende Rastelemente wie federnde Blechzungen überflüssig, was die Herstellung und die werkzeuglose Handhabung des Dachhimmels bzw. der Innenschale sehr erleichtert.

Zweckmäßig ist entsprechend Anspruch 3 die Rastvertiefung hinterschnitten, während der Rastvorsprung einen entsprechend verdickten Kopf aufweist.

Allerdings können die Aufnahmevertiefungen wie im Anspruch 4 angegeben über ihre Höhe bzw. Tiefe auch von gleichbleibender Weite sein, wenn die Rastvorsprünge eine einen Reibschluß mit der Aufnahmevertiefung ermöglichende Profilierung, beispielsweise eine sogenannte Tannenbaumprofilierung, aufweisen. Aufnahmevertiefungen und Rastvorsprünge können auch gemäß Anspruch 5 jeweils mit miteinander eingreifenden Profilierungen versehen sein.

Wie im Anspruch 6 angegeben ist, können die Rastelemente aber auch paarweise nur aus Aufnahmevertiefungen bestehen, in die ein getrennt hergestelltes und in beide Aufnahmevertiefungen eingreifendes Rastelement einzulegen ist, das mit beiden Aufnahmevertiefungen verrastet. Die Aufnahmevertiefungen können gemäß Anspruch 7 nutenförmig und die Rastvorsprünge leistenförmig, d.h. beide jeweils langgestreckt ausgebildet sein. Aber auch Aufnahmevertiefungen und Rastvorsprünge, die nach Anspruch 8 jeweils nur punktuell an voneinander beabstandeten Stellen vorgesehen sind, können eine ausreichend sichere Befestigung des Dachhimmels ermöglichen.

Wenn das Fahrzeugdachmodul eine Schiebedacheinheit besitzt, ermöglicht der üblicherweise aus stranggepreßten Aluminiumprofilen hergestellte Schiebedachrahmen gemäß Anspruch 9, daß die rahmenseitigen Rastelemente bei der Profilherstellung schon ein- bzw. angeformt werden, so daß nur der Dachhimmel mit komplementären Rastelementen zu versehen ist.

Die erfindungsgemäß erzielte Austauschbarkeit des Dachhimmels ermöglicht auch einen bemerkenswerten Folgevorteil, der darin besteht, daß das Dachmodul ohne Dachhimmel temporär auf den Karosserierahmen aufgelegt und seine Außenhaut zusammen mit der Karosserie lackiert werden kann, ohne daß es dabei zu Beeinträchtigungen des Dachhimmels kommt. Das Dachmodul kann danach wieder von der Karosserie zwecks späterer Montage abgenommen werden. Für diese vorteilhafte Möglichkeit kann die In nenschale des Dachmoduls vorübergehend mit angeschäumten und später wieder abtrennbaren Distanzstücken ausgebildet sein, wie das in Anspruch 10 angegeben ist. Für eine sichere temporäre Auflage des Dachmoduls auf den Karosserierahmen ist es von Vorteil, wenn entsprechend Anspruch 11 die Distanzstücke mittels angeschäumter Rastzungen zur lösbaren Verrastung mit den Innenrändern des Karosserierahmens ausgebildet sind.

Weitere Einzelheiten der Erfindung werden nachfolgend anhand der unterschiedliche Ausführungsformen darstellenden und zum Teil schematischen Zeichnungen näher erläutert. Darin zeigt:
- Fig. 1: Eine Perspektivansicht eines Fahrzeugdachs ohne Schiebedacheinheit,
- Fig. 2: den abgebrochenen Schnitt entsprechend der Linie II-II in Fig. 1 betreffend eine erste Ausführungsform der Rastelemente,
- Fig. 3: einen der Fig. 2 ähnlichen abgebrochenen Schnitt betreffend eine zweite Ausführungsform der Rastelemente,
- Fig. 4: einen der Fig. 3 ähnlichen abgebrochenen Schnitt mit einem an die Innenschale vorübergehend angeschäumten, umklappbaren und abtrennbaren Distanzstück,
- Fig. 5: eine Perspektivansicht eines Fahrzeugdachs mit Schiebedacheinheit,
- Fig. 6: den abgebrochenen Schnitt entsprechend der Linie VI-VI in Fig. 1 betreffend eine erste Ausführungsform der Rastelemente,
- Fig. 7: eine abgebrochene und geschnittene perspektivische Explosionsansicht des in Fig. 6 dargestellten Schiebedachrahmens und des damit zu verrastenden Dachhimmels,
- Fig. 8: einen der Fig. 6 ähnlichen abgebrochenen Schnitt betreffend eine zweite Ausführungsform der Rastelemente und
- Fig. 9: eine abgebrochene und geschnittene perspektivische Explosionsansicht des in Fig. 8 dargestellten Schiebedachrahmens, des getrennten Rastelements und des Dachhimmels.

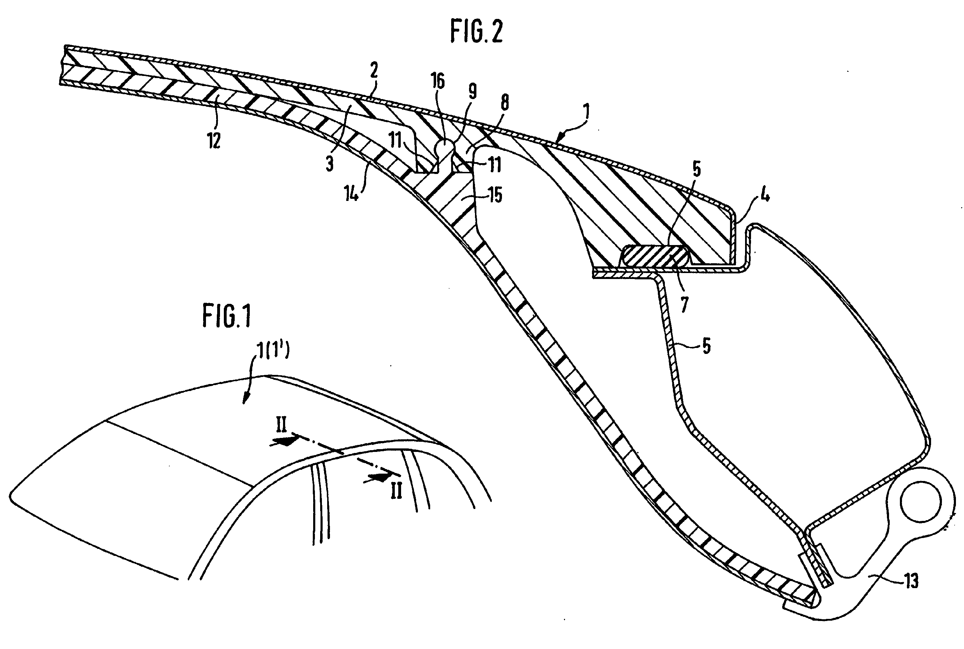

Die Figuren 2, 3, 6 und 8 zeigen fertig montierte Fahrzeugdachmodule mit jeweils fest verrasteten Dachhimmeln.

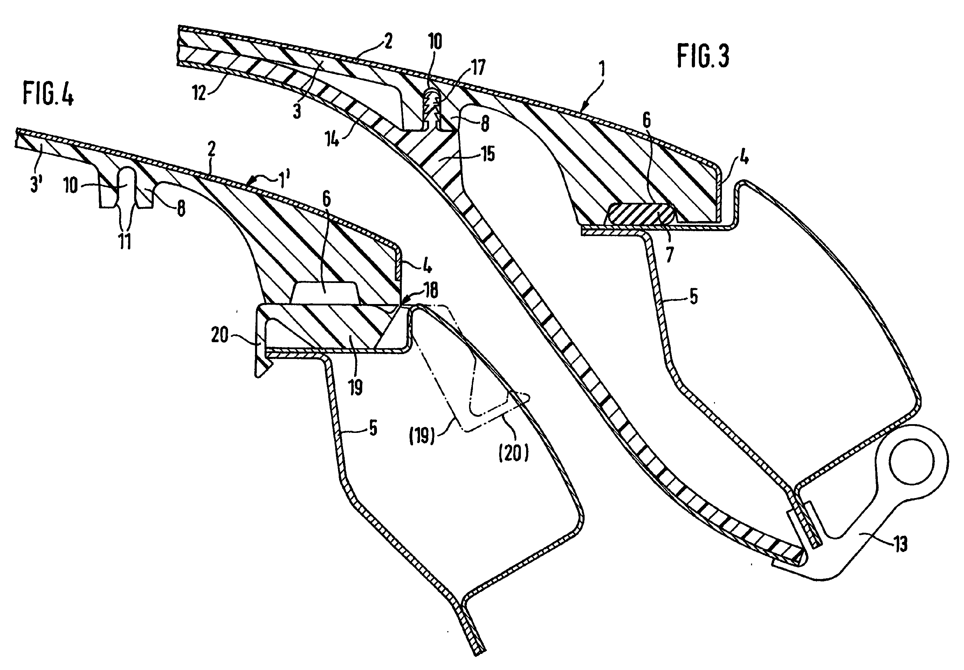

In den Figuren 2 und 3 ist jeweils ein Dachmodul 1 dargestellt, bei dem eine starre Dachhaut 2, die aus einem tiefgezogenen Metallblech, beispielsweise Aluminiumblech, oder einer vakuumverformten Kunststoffolie gebildet sein kann, auf ihrer Innenfläche mit einer aufgeschäumten Innenschale 3 versehen ist. Geeignete Werkstoffe für die Innenschale 3 sind Hartschaumkunststoffe auf PUR-Basis, die durch dem Kunststoff vor dem Aufschäumen einverleibte Faserstoffe, beispielsweise Glasfaserabschnitte, armiert sein können. Aber auch in die Schäumform eingelegte Gewebe, Gewirke, Vliese u.dgl. sind als Armierung geeignet. Durch das Aufschäumen der armierten Innenschale 3, die bis zu einer Randabkantung 4 der Dachhaut 2 reicht, entsteht ein sandwichartiges Verbunddachmodul hoher Formbeständigkeit und Festigkeit. Alle Innenkonturen der Innenschale 3 einschließlich der noch zu beschreibenden Rastelemente werden während des Aufschäumvorgangs durch entsprechende Formgebung der Schäumform gebildet. So ist die Innenschale 3 in ihrem an die Randabkantung 4 angrenzenden Randbereich, mit welchem sie auf den Karosserierahmen 5 aufgelegt wird, mit einer umlaufend eingeformten Aufnahmenut 6 versehen, in welcher eine das Dachmodul 1 gegenüber dem Karosserierahmen 5 abdichtende und daran befestigende Kleberraupe 7 Aufnahme findet.

An der Unterseite der Innenschale 3 sind Vorsprünge 8 gebildet, in welche in den Ausführungsformen nach den Figuren 2 bis 4 unterschiedlich ausgebildete Aufnahmevertiefungen 9 bzw. 10 eingeformt sind. Während die Aufnahmevertiefung 9 bei der Ausführungsform gemäß Fig. 2 sich nach innen zu durch Hinterschnitt erweitert, besitzt die Aufnahmevertiefung 10 über ihre Höhe bzw. Tiefe im wesentlichen eine gleichbleibende Weite. Beide Aufnahmevertiefungen 9, 10 sind an ihrem Eingang mit Abschrägungen 11 versehen, welche das Einfädeln der zugeordneten Rastvorsprünge erleichtern.

Dem solchermaßen ausgebildeten Dachmodul 1 ist ein getrennt hergestellter Dachhimmel 12 zugeordnet, der bei den in den Figuren 2 und 3 dargestellten Ausführungsformen aus einem Schaumkunststoff vorgeformt ist und den Karosserierahmen 5 abdeckende Bereiche aufweist. Die Verbindung dieser Bereiche mit dem Karosserierahmen kann ein in den Figuren 2 und 3 nur in Umrißlinien schematisch dargestellter Verbindungskeder 13 übernehmen, der zugleich einen Hohlkammerabschnitt zur Abdichtung der benachbarten Fahrzeugtür (nicht dargestellt) gegenüber dem Karosserierahmen 5 aufweisen kann. Der Dachhimmel 12, welcher der Innenschale 3 großflächig anliegt, ggf. unter bei seiner Formgebung berücksichtigter Vorspannung, kann ebenfalls aus einem geschäumten Kunststoff, beispielsweise auf PUR-Basis, geformt sein. Weiterhin kann der Schaumkunststoff des Dachhimmels 12 auf die bezüglich der Innenschale 3 beschriebene Weise armiert sein. Auf seiner unteren Fläche ist der Dachhimmel 12 dekorativ ausgebildet, beispielsweise mit einer Beschichtung 14 aus Textilmaterial, oder mit einer Kunststofffolie versehen.

Auf der Oberseite ist der Dachhimmel 12 den Vorsprüngen 8 der Innenschale 3 gegenüberliegend mit komplementären angeschäumten Vorsprüngen 15 versehen, an welchen sich bezüglich der Figuren 2 und 3 unterschiedlich ausgebildete angeformte Rastvorsprünge 16 bzw. 17 befinden. Die Anbringungsorte der Rastvorsprünge 16, 17 an dem Dachhimmel 12 sind präzise auf die Anbringungsorte der Aufnahmevertiefungen 9 bzw. 10 an der Innenschale 3 abgestimmt, so daß die komplementären Rastelemente paßgenau miteinander verrastbar sind. Der aus Fig. 2 ersichtliche Rastvorsprung 16 besitzt einen entsprechend dem Hinterschnitt der Aufnahmevertiefung 9 verdickten Kopf, wodurch es beim Verrasten des Dachhimmels 12 mit der Innenschale 3 zu einem formschlüssigen Verrastungseingriff zwischen Rastvorsprung 16 und Aufnahmevertiefung 9 kommt.

Der in Fig. 3 dargestellte Rastvorsprung 17 besitzt eine Tannenbaumprofilierung, wodurch der Rastvorsprung im Reibschluß in die Aufnahmevertiefung 10 eingreift. Die Aufnahmevertiefung 9 könnte auch mit einer komplementär entsprechenden Profilierung versehen sein, wodurch Formschluß zwischen den miteinander eingreifenden Flächen an den Rastvorsprüngen und an den Aufnahmevertiefungen entstehen würde. Die in den Figuren 2 und 3 dargestellten Rastelemente können hinsichtlich ihres Anbringungsortes auch in umgekehrter Anordnung vorgesehen sein, d.h. die Aufnahmevertiefungen können in die Vorsprünge 15 des Dachhimmels 12 eingeformt sein, während die Rastvorsprünge an die Vorsprünge 8 der Innenschale 3 angeformt sind.

Auch bei den in den Figuren 1 bis 4 dargestellten Ausführungsformen können die Aufnahmevertiefungen 9, 10 nutenförmig und die Rastvorsprünge 16, 17 leistenförmig ausgebildet sein. Allerdings können die Aufnahmevertiefungen 9, 10 und die Rastvorsprünge 16, 17 jeweils nur an voneinander beabstandeten einzelnen Stellen vorgesehen sein.

Das in Fig. 4 dargestellte Dachmodul 1' weist die Besonderheit auf, daß an dem Außenrand der Innenschale 3' über eine materialverdünnte Biegestelle 18, d.h. über ein sogenanntes Folienscharnier, ein mit der Innenschale 3' verbundenes Distanzstück 19 angeschäumt ist. Die Klappbarkeit des Distanzstücks 19 gegenüber der Innenschale 3' ist in Fig. 4 durch das auch in strichpunktierten Linien um die Biegestelle 18 verschwenkt eingezeichnete Distanzstück angedeutet. Das Distanzstück 19 ist mit einer damit einteiligen federnden Rastzunge 20 versehen, die mit dem zugeordneten Innenrand des Karosserierahmens 5 verrastbar ist, wie das in Fig. 4 gezeigt ist. Die in Fig. 4 dargestellte Ausführungsform des Dachmoduls 1' erlaubt die gleichzeitige Lackierung der Fahrzeugkarosserie und der Dachhaut 2 des Dachmoduls 1'. Hierbei sitzt das Dachmodul 1' nicht unmittelbar dem Karosserierahmen 5 auf, sondern dem nach innen eingeschwenkten Distanzstück 19. Für den Lackiervorgang ist der Dachhimmel nicht mit der Innenschale 3' verrastet und kann daher beim Lackieren nicht beschädigt werden. Selbstverständlich sind mindestens auf der gegenüberliegenden Seite ebenfalls Distanzstücke 19 mit Rastzungen 20 angeordnet. Nach dem Lackieren werden die Rastzungen 20 zur Abnahme des Dachmoduls 1' von dem Karosserierahmen 5 entriegelt. Die Distanzstücke 19 werden dann an den Biegestellen 18 abgetrennt.

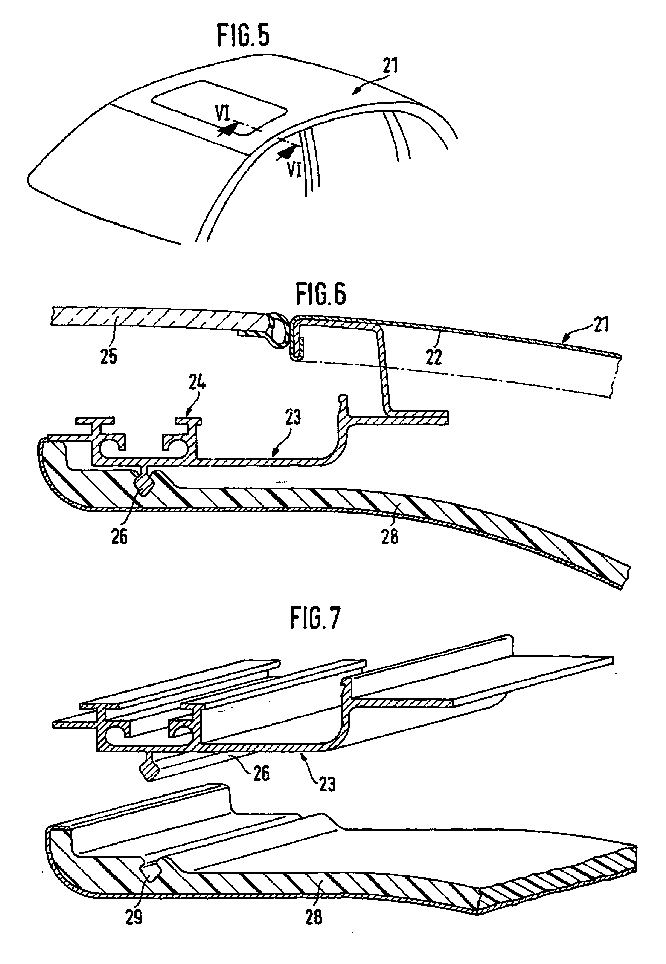

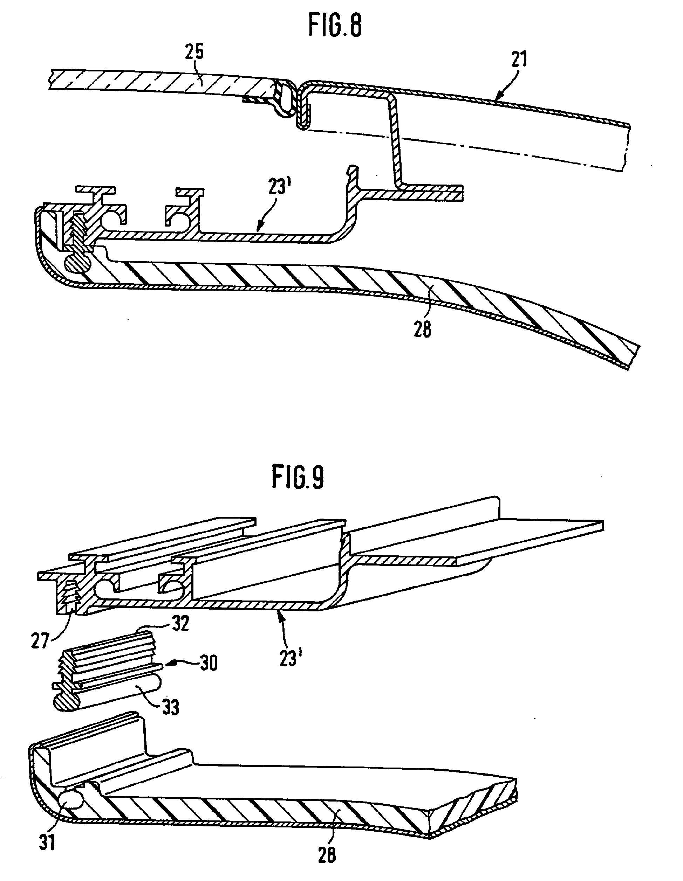

Bei den in den Figuren 5 bis 9 dargestellten Ausführungsformen ist das Fahrzeugdach 21, welches ebenfalls wie mit Bezug auf die Figuren 1 bis 4 beschrieben wurde, als Dachmodul ausgebildet sein kann, welches zur Befestigung an einem Karosserierahmen bestimmt ist, mit einer Schiebedacheinheit ausgerüstet. Im gezeichneten Beispiel gehört zu dieser Schiebedacheinheit ein mit der Dachhaut 22 fest verbundener Schiebedachrahmen 23, an welchem sich Führungsschienen 24 für die Führung von Funktions- und Antriebselementen (nicht dargestellt) für den Schiebedeckel 25 befinden. In den in den Figuren 6 und 8 gezeichneten Ausführungsformen ist der Schiebedeckel 25 ein Glasdeckel, könnte aber auch in bekannter Weise als Blechdeckel ausgebildet sein. Der Innenfläche der Dachhaut 22 kann ebenfalls eine Innenschale aus Kunststoff aufgeschäumt sein, wie das in den Figuren 6 und 8 in Strich-Punkt-Linien angedeutet ist. Die Figuren 6 und 8 zeigen den Schiebedeckel 5 in seiner Schließlage. Der Dachhimmel 26 ist bei diesen Ausführungsformen mit dem Schiebedachrahmen 23 auf noch zu beschreibende Weise lösbar verbunden.

Der Schiebedachrahmen 23 ist aus einem stranggepreßten Aluminiumprofil geformt, an welches nicht nur die Führungsschienen 24 beim Strangpreßvorgang angeformt sind, sondern auch ein nach unten vorspringender durchgehend leistenförmiger Rastvorsprung 26, der ähnlich der Ausführungsform gemäß Fig. 2 mit einem verdickten Kopf versehen ist. Bei der Ausführungsform gemäß den Figuren 8 und 9 ist beim Strangpreßvorgang in das Profil des Schiebedachrahmens 23' eine nach unten offene durchgehende nutförmige Aufnahmevertiefung 27 eingeformt.

Der Dachhimmel 28 ist bei beiden Ausführungsformen gemäß den Figuren 6, 7 und 8, 9 aus einem geeigneten Kunststoffschaum vorgeformt, der auch in diesem Fall ein Schaum auf PUR-Basis sein kann, der eine innere Armierung aufweist, wie das mit Bezug auf die vorangehenden Ausführungsformen beschrieben worden ist. Der Dachhimmel 28 besitzt auf seiner Oberseite eine mit dem Rastvorsprung 26 komplementäre nutförmige Aufnahmevertiefung 29, die nach oben für den Eintritt des Rastvorsprungs 26 offen ist. Die Befestigung des Dachhimmels 28 an dem Schiebedachrahmen 23 erfolgt durch paßgenaues Verrasten der Aufnahmevertiefung 29 mit dem Rastvorsprung 26.

Bei der Ausführungsform gemäß den Figuren 8 und 9 ist ein getrenntes Rastelement 30 vorgesehen, welches sowohl mit der nutförmigen Aufnahmevertiefung 27 in dem Schiebedachrahmen 23' als auch mit einer nutförmigen Aufnahmevertiefung 31 in dem Dachhimmel 28 eingreift. Zu diesem Zweck ist das Rastelement 30 beidseitig mit leistenförmig durchgehenden Rastvorsprüngen 32 und 33 versehen. Diese können für einen formschlüssigen oder reibschlüssigen Eingriff in die zugehörigen nutenförmigen Aufnahmevertiefungen 27, 31 augebildet sein, wobei die Aufnahmevertiefungen diesbezüglich selbstverständlich den Rastvorsprüngen anzupassen sind. Im gezeigten Beispiel sind die Aufnahmevertiefung 31 und der Rastvorsprung 33 etwa analog der mit Bezug auf Fig. 2 beschriebenen Ausführungsform ausgebildet. Die Aufnahmevertiefung 27 und der zugehörige Rastvorsprung 32 entsprechen etwa der mit Bezug auf Fig. 3 beschriebenen Ausführungsform. Selbstverständlich kann bei den Ausführungsformen gemäß den Figuren 2 und 3 auch ein getrenntes Rastelement vorgesehen sein, welches in zugehörige Aufnahmevertiefungen der Innenschale und des Dachhimmels eingreift.

Bei der Vereinigung der in Fig. 9 dargestellten Teile kann zunächst das getrennte Rastelement 30 mit der nutförmigen Aufnahmevertiefung 31 des Dachhimmels 28 verrastet werden, bevor die so vereinigten Teile 28, 30 mit dem Schiebedachrahmen 23' verrastet werden. Aber auch eine umgekehrte Montagefolge, bei der das getrennte Rastelement 30 zunächst mit dem Schiebedachrahmen 23' vereinigt wird, bevor die Verrastung mit dem Dachhimmel 28 erfolgt, ist ebenfalls möglich.

Vorgeschlagen wird ein insbesondere für Kraftfahrzeuge bestimmtes Fahrzeugdach, insbesondere getrennt von der Karosserie anzufertigendes und mit der Karosserie zu vereinigendes Fahrzeugdachmodul, das im wesentlichen aus einer starren Dachhaut, ggf. einer darauf aufgeschäumten Innenschale aus Schaumkunststoff und einem dekorativen Dachhimmel aus Schaumkunststoff besteht. Das Dachmodul kann mit einer integrierten Schiebedacheinheit ausgerüstet sein. Die Besonderheit besteht darin, daß der Dachhimmel getrennt vom Dachmodul 1 hergestellt und über komplementäre paßgenau angebrachte Rastelemente mit der Innenschale oder ggf. mit dem Schiebedachrahmen der Schiebedacheinheit lösbar verrastet werden kann, d.h. austauschbar ist.

## Patentansprüche

1. Fahrzeugdach, insbesondere für Kraftfahrzeuge, mit einer starren Dachhaut (1, 1') und einer an deren Innenfläche angeschäumten Innenschale (3, 3') aus Kunststoff, wobei mit der Innenschale (3, 3') ein Dachhimmel (12) verbunden ist, der an seiner unteren Fläche dekorativ ausgebildet ist, **dadurch gekennzeichnet, daß** der als getrenntes Teil aus Schaumkunststoff vorgeformte Dachhimmel (12) an seiner Oberseite mit Rastelementen (16, 17) versehen ist, die mit paßgenau dazu an der Innenschale (3, 3') angebrachten komplementären Rastelementen (9, 10) lösbar verrastet sind, wobei die Rastelemente jeweils paarweise aus einer Aufnahmevertiefung (9, 10) und einem Rastvorsprung (16, 17) bestehen, die Aufnahmevertiefungen (9, 10) in den Schaumkunststoff der Innenschale (3, 3') und/oder des Dachhimmels (12) eingeformt sind und die Rastvorsprünge (16, 17) aus dem Schaumkunststoff der Innenschale (3, 3') und/oder dem Schaumkunststoff des Dachhimmels (12) und damit jeweils einteilig angeformt sind.

2. Fahrzeugdach, insbesondere für Kraftfahrzeuge, mit einer starren Dachhaut (22) und einem mit der Dachhaut (22) fest verbundenen Schiebedachrahmen (23, 23') einer Schiebedacheinheit, wobei mit dem Schiebedachrahmen (23, 23') ein als Innenschale aus geschäumtem Kunststoff vorgeformter Dachhimmel (28) verbunden ist, der an seiner unteren Fläche dekorativ ausgebildet ist und der Dachhimmel (28) an seiner Oberseite mit Rastelementen (29, 31) versehen ist, die mit paßgenau dazu an dem Schiebedachrahmen (23, 23') angebrachten komplementären Rastelementen (26, 27) lösbar verrastet sind, **dadurch gekennzeichnet, daß** die Rastelemente jeweils paarweise aus einer Aufnahmevertiefung (29, 31) und einem Rastvorsprung (26) bestehen, wobei die Aufnahmevertiefungen (29, 31) in den Schaumkunststoff des Dachhimmels (28) eingeformt sind und die Rastelemente am Schiebedachrahmen (23, 23') nach unten vorspringende durchgehende leistenförmige Rastvorsprünge (26) oder nach unten offene durchgehende Nuten (27) sind, mit welchen Nuten (27) ein zunächst getrenntes Rastelement (30) verrastbar ist, das auch mit der Aufnahmevertiefung (29, 31) des Dachhimmels (28) verrastbar ist.

3. Fahrzeugdach nach Anspruch 1 oder 2, **dadurch gekennzeichnet, daß** sich die Aufnahmevertiefung (9, 29) nach innen zu durch Hinterschnitt erweitert, während der Rastvorsprung (16, 26) einen entsprechend dem Hinterschnitt verdickten Kopf aufweist.

4. Fahrzeugdach nach Anspruch 1 oder 2, **dadurch gekennzeichnet, daß** die Aufnahmevertiefung (10) über ihre Höhe bzw. Tiefe im wesentlichen von gleichbleibender Weite ist, während der Rastvorsprung (17) ein mit der Aufnahmevertiefung (10) im Reibschluß eingreifende Tannenbaumprofilierung aufweist.

5. Fahrzeugdach nach Anspruch 1 oder 2, **dadurch gekennzeichnet, daß** die Aufnahmevertiefung und der Rastvorsprung jeweils mit miteinander eingreifenden Profilierungen versehen sind.

6. Fahrzeugdach nach Anspruch 1, **dadurch gekennzeichnet, daß** die Rastelemente paarweise aus Aufnahmevertiefungen bestehen, in die ein getrenntes Rastelement (30) eingreift.

7. Fahrzeugdach nach einem der Ansprüche 1 bis 6, **dadurch gekennzeichnet, daß** die Aufnahmevertiefungen (9, 10, 27, 29, 31) nutenförmig und die Rastvorsprünge (16, 17, 26) leistenförmig ausgebildet sind.

8. Fahrzeugdach nach einem der Ansprüche 1 bis 6, **dadurch gekennzeichnet, daß** die Aufnahmevertiefungen (9, 10) und die Rastvorsprünge (16, 17) jeweils nur an voneinander beabstandeten einzelnen Stellen vorgesehen sind.

9. Fahrzeugdach nach einem der Ansprüche 2 bis 8, **dadurch gekennzeichnet, daß** die Rastelemente am Schiebedachrahmen jeweils bei der Profilherstellung für den Schiebedachrahmen (23, 23') ein- bzw. angeformt sind.

10. Fahrzeugdach nach einem der Ansprüche 1 und 3 bis 8, **dadurch gekennzeichnet, daß** an mindestens zwei gegenüberliegenden Rändern der Innenschale (3') jeweils mindestens ein über eine materialverdünnte Biegestelle (18) mit der Innenschale (3') verbundenes Distanzstück (19) an die Innenschale (3) angeschäumt ist, das nach innen umgeklappt zur temporären lösbaren Auflage auf einen Karosserierahmen (5) während der Lackierung der Karosserie und der Dachhaut (1') bestimmt ist und an der Biegestelle (18) abtrennbar ist.

11. Fahrzeugdach nach Anspruch 10, **dadurch gekennzeichnet, daß** die Distanzstücke (19) mittels angeschäumter Rastzungen (20) zur lösbaren verrastung mit den Innenrändern des Karosserierahmens (5) ausgebildet sind.

## Claims

1. Vehicle roof, in particular for motor vehicles, with a rigid roof skin (1, 1') and an inner plastic skin (3, 3') foamed onto its interior surface, whereby a headliner (12) with a decorative bottom surface is attached to the inner skin (3, 3'), **characterized in that** the headliner (12), pre-formed as a separate part out of plastics foam, has interlocking elements (16, 17) on its top surface which fit exactly with complementary interlocking elements (9, 10) on the inner skin (3, 3') to form a releasable connection, whereby the interlocking elements each consist of a paired location recess (9, 10) and interlocking projection (16, 17), the location recesses (9, 10) are moulded into the plastics foam of the inner skin (3, 3') and/or the headliner (12), and the interlocking projections (16, 17) are formed from the plastics foam of inner skin (3, 3') and/or the plastics foam of the headliner (12) and are formed as one-piece with it.

2. Vehicle roof, in particular for motor vehicles, with a rigid roof skin (22) and a sliding roof frame (23, 23') of a sliding roof unit, which frame is permanently attached to the roof skin (22), whereby a headliner (28) pre-formed from foamed plastic as an inner skin is attached to the sliding roof frame (23, 23') and has a decorative bottom surface, and the headliner (28) has interlocking elements (29, 31) on its top surface, which fit exactly with complementary interlocking elements (26, 27) attached to the sliding roof frame (23, 23') to form a releasable connection, **characterized in that** the interlocking elements each consist of a paired location recess (29, 31) and interlocking projection (26), whereby the location recesses (29, 31) are moulded into the plastics foam of the headliner (28) and the interlocking elements on the sliding roof frame (23, 23') are downward pointing continuous interlocking projections (26) in the form of ribs or downward pointing open continuous slots (27), with which slots (27) a firstly separate interlocking element (30) can be interlocked, which can be also interlocked with the location recess (29, 31) of the headliner (28).

3. Vehicle roof in accordance with claim 1 or 2, **characterized in that** the location recess (9, 29) widens towards the inside by means of an undercut, whilst the interlocking projection (16, 26) has a thickened head corresponding to the undercut.

4. Vehicle roof in accordance with claim 1 or 2, **characterized in that** the location recess (10) has a substantially constant width over its height or depth, whilst the interlocking projection (17) has a christmas tree shaped profiling to engage with the location recess (10) to form a frictional connection.

5. Vehicle roof in accordance with claim 1 or 2, **characterized in that** the location recess and the interlocking projection both have profilings which engage with one another.

6. Vehicle roof in accordance with claim 1, **characterized in that** the interlocking elements consist of pairs of location recesses (27, 31) into which a separate interlocking element (30) engages.

7. Vehicle roof in accordance with one of the claims 1 to 6, **characterized in that** the location recesses (9, 10, 27, 29, 31) are in the form of slots and the interlocking projections (16, 17, 26) are in the form of ribs.

8. Vehicle roof in accordance with one of the claims 1 to 6, **characterized in that** each of the location recesses (9, 10) and the interlocking projections (16, 17) are only provided at particular positions at set distances from one another.

9. Vehicle roof in accordance with one of the claims 2 to 8, **characterized in that** the interlocking elements on the sliding roof frame (23, 23') are in each case formed into or onto the sliding roof frame section (23, 23') during its manufacture.

10. Vehicle roof in accordance with one of the claims 1 and 3 to 8, **characterized in that** at least on two opposing edges of the inner skin (3') at least one spacer (19) is foamed onto the inner skin (3') with a flexible section (18) where the material is thinned, and can be swung inwards and its intended to provide a temporary support on a vehicle body frame component (5) for painting of the bodywork and roof skin (1') and can be detached at the flexible section (18).

11. Vehicle roof in accordance with claim 10, **characterized in that** the spacers (19) by means of foamed snap-in clips (20) are designed to form a releasable engaged interlocking with the inner edges of the vehicle body frame (5).

## Revendications

1. Toit de véhicule, en particulier pour un véhicule automobile, comprenant une peau de toit rigide (1, 1') et une coque intérieure (3, 3') en matière plastique, appliquée par moussage sur la surface intérieure de la peau de toit, et un ciel de toiture (12) relié à la coque intérieure (3, 3'), lequel est réalisé de façon décorative au niveau de sa surface inférieure, **caractérisé en ce que** le ciel de toiture (12) préformé en mousse de matière plastique comme une pièce séparée est pourvu au niveau de sa surface supérieure d'éléments d'enclenchement (16, 17) qui sont enclenchés de façon détachable avec des éléments d'enclenchement complémentaires (9, 10) montés de façon exactement ajustée sur la coque intérieure (3, 3'), les éléments d'enclenchement étant constitués respectivement par paires d'un renfoncement de réception (9, 10) et d'une saillie d'enclenchement (16, 17), les renfoncements de réception (9, 10) sont conformés dans la mousse de matière plastique de la coque intérieure (3, 3') et/ou du ciel de toiture (12), et les saillies d'enclenchement (16, 17) sont conformées à partir de la mousse de matière plastique de la coque intérieure (3, 3') et/ou de la mousse de matière plastique du ciel de toiture (12) et donc d'un seul tenant avec celle-ci/celui-ci.

2. Toit de véhicule, en particulier pour un véhicule automobile, comprenant une peau de toit rigide (22) et un cadre de toit coulissant (23, 23'), relié solidairement à la peau de toit (22), d'une unité de toit coulissant, et un ciel de toiture (28) préformé à titre de coque intérieure en mousse de matière plastique est relié au cadre de toit coulissant et est réalisé de façon décorative au niveau de sa surface inférieure, et le ciel de toiture (28) est pourvu au niveau de sa surface supérieure d'éléments d'enclenchement (29, 31) qui sont enclenchés de façon détachable avec des éléments d'enclenchement complémentaires (26, 27) montés de façon exactement ajustée sur le cadre de toit coulissant (23, 23'), **caractérisé en ce que** les éléments d'enclenchement sont constitués respectivement par paires d'un renfoncement de réception (29, 31) et d'une saillie d'enclenchement (26), les renfoncements de réception (29, 31) sont conformés dans la mousse de matière plastique du ciel de toiture (28) et les éléments d'enclenchement sont des saillies d'enclenchement (26) en forme de baguettes continues en saillie vers le bas sur le cadre de toit coulissant (23, 23') ou bien des rainures continues ouvertes vers le bas (27), telles qu'un élément d'enclenchement (30) tout d'abord séparé est susceptible d'être enclenché avec lesdites rainures (27) et est susceptible d'être enclenché également avec le renfoncement de réception (29, 31) du ciel de toiture (28).

3. Toit de véhicule selon la revendication 1 ou 2, **caractérisé en ce que** le renfoncement de réception (9, 29) s'élargit en direction de l'intérieur par une contre-dépouille, alors que la saillie d'enclenchement (16, 26) présente une tête avec un épaississement qui correspond à la contre-dépouille.

4. Toit de véhicule selon la revendication 1 ou 2, **caractérisé en ce que** le renfoncement de réception (10) présente en hauteur ou en profondeur une taille essentiellement constante, alors que la saillie d'enclenchement (17) présente un profilage en forme d'arbre de Noël engagé en coopération de friction avec le renfoncement de réception (10).

5. Toit de véhicule selon la revendication 1 ou 2, **caractérisé en ce que** le renfoncement de réception et la saillie d'enclenchement sont respectivement dotés de profilages en engrènement mutuel.

6. Toit de véhicule selon la revendication 1, **caractérisé en ce que** les éléments d'enclenchement sont constitués par paires de renfoncements de réception dans lesquels s'engage un élément d'enclenchement séparé (30).

7. Toit de véhicule selon l'une des revendications 1 à 6, **caractérisé en ce que** les renfoncements de réception (9, 10, 27, 29, 31) sont réalisés en forme de rainures et les saillies d'enclenchement (16, 17, 26) sont réalisées en forme de barrettes.

8. Toit de véhicule selon l'une des revendications 1 à 6, **caractérisé en ce que** les renfoncements de réception (9, 10) et les saillies d'enclenchement (16, 17) sont prévu(e)s respectivement uniquement à des emplacements isolés écartés les uns des autres.

9. Toit de véhicule selon l'une des revendications 2 à 8, **caractérisé en ce que** les éléments d'enclenchement sont conformés ou moulés sur le cadre de toit coulissant lors de la réalisation du profil pour le cadre de toit coulissant (23, 23').

10. Toit de véhicule selon l'une des revendications 1 et 3 à 8, **caractérisé en ce que**, à au moins deux bordures opposées de la coque intérieure (3') au moins une pièce d'écartement respective (19), reliée à la coque intérieure (3) via un emplacement de flexion (18) où le matériau est aminci, est appliquée par moussage sur la coque intérieure (3), pièce d'écartement qui est destinée, une fois basculée vers l'intérieur, à venir en appui temporaire de façon détachable sur un cadre de carrosserie (5) pendant la peinture de la carrosserie et de la peau de toit (1'), et qui est séparable au niveau de l'emplacement de flexion (18).

11. Toit de véhicule selon la revendication 10, **caractérisé en ce que** les pièces d'écartement (19) sont réalisées avec des languettes d'enclenchement rapportées par moussage (20) pour la mise en enclenchement détachable avec les bordures intérieures du cadre de carrosserie (5).
